# EUROPÄISCHE PATENTSCHRIFT

(11) **EP 2 035 905 B1**
(45) Veröffentlichungstag und Bekanntmachung des Hinweises auf die Patenterteilung: **15.09.2010**
(21) Anmeldenummer: 07786930.3
(22) Anmeldetag: 29.06.2007
(51) Int. Cl.: G05D 23/19, F25B 21/00, G01T 1/16

(54) **KRYO-DETEKTORVORRICHTUNG MIT TEMPERATURSTABILISIERUNGSEINRICHTUNG**
CRYOGENIC DETECTOR DEVICE COMPRISING TEMPERATURE STABILIZATION DEVICE
DISPOSITIF DE CRYO-DÉTECTION COMPRENANT UN DISPOSITIF DE STABILISATION DE LA TEMPÉRATURE

(30) Priorität: 30.06.2006 DE 102006030288
(43) Veröffentlichungstag der Anmeldung: 18.03.2009
(73) Patentinhaber: Vericold Technologies GmbH, 85737 Ismaning (DE)
(72) Erfinder: HÖHNE, Jens, 80331 München (DE); BÜHLER, Matthias, 82343 Pöcking (DE)
(74) Vertreter: Winter, Brandl, Fürniss, Hübner, Röss, Kaiser, Polte - Partnerschaft
(86) Internationale Anmeldenummer: PCT/EP2007/056559
(87) Internationale Veröffentlichungsnummer: WO 2008/000817

(56) Entgegenhaltungen:
- DE-A1-102004 054 750
- DE-B3- 10 317 888
- US-A- 5 091 361
- HAGMANN C ET AL: "Adiabatic demagnetization refrigerators for small laboratory experiments and space astronomy" CRYOGENICS, ELSEVIER, KIDLINGTON, GB, Bd. 35, Nr. 5, Mai 1995 (1995-05), Seiten 303-309, XP004038158 ISSN: 0011-2275

## Beschreibung

Die Erfindung betrifft eine Kryo-Detektorvorrichtung nach dem Oberbegriff des Anspruch 1.

Aus der DE 103 17 888.0 A ist eine Kryo-Detektorvorrichtung bekannt, bei der eine Sensoreinrichtung mit einer mechanischen Kühleinrichtung auf die gewünschte Kühltemperatur T_{minK} gekühlt wird. Bei der Kühlung der mechanischen Kühleinrichtung kommt es zu Temperaturschwankungen ±ΔT₁ am Kaltkopf der Kühleinrichtung. Für bestimmte Sensoreinrichtungen bzw. für bestimmte Anwendungen, z.B. supraleitende Strahlungsdetektoren mit hoher Energieauflösung, sind derartige Temperaturschwankungen nicht tolerierbar. Aus der DE 103 17 888.0 A ist es bekannt ein Heizelement vorzusehen, das thermisch mit der Sensoreinrichtung gekoppelt ist. Damit können durch Gegenheizen die kleinen störenden Temperaturschwankungen ±ΔT₁ verringert werden. Durch diese Temperaturstabilisierung kann die Sensoreinrichtung auf eine Betriebstemperatur Tₛ = Tₘᵢₙₖ ± ΔT₂ mit ΔT₂ < ΔT₁ stabilisiert werden.

Alternativ oder zusätzlich lassen sie die störenden Temperaturschwankungen ±ΔT₁ auch dadurch dämpfen, das der Kaltkopf der mechanischen Kühleinrichtung thermisch direkt mit einer großen Wärmekapazität gekoppelt wird. Koppelt man die Wärmekapazität schwach an den Kaltkopf an, so kann man die Temperaturschwankungen ±ΔT₁ weiter reduzieren. Nachteilig hierbei ist, dass es sehr lange dauert, bis alles von Raumtemperatur auf die gewünschte Temperatur abgekühlt ist.

Ausgehend von der DE 103 17 888.0 A ist es daher Aufgabe der vorliegenden Erfindung eine Kryo-Detektorvorrichtung mit einer mechanischen Kühleinrichtung und einer Temperaturstabilisierung anzugeben, bei der die bei mechanischen Kühleinrichtungen auftretenden Temperaturschwankungen wesentlich reduziert werden.

Die Lösung dieser Aufgabe erfolgt durch die Merkmale des Anspruchs 1.

Mittels einer Entmagnetisierungsstufe (EM-Stufe) können die durch die Kühleinrichtung, insbesondere im Falle einer mechanischen Kühleinrichtung, auftretenden Temperaturschwankungen kompensiert werden. Die EM-Stufe ist hierbei thermisch mit der Sensoreinrichtung und/oder dem Kaltkopf gekoppelt. Bei einer EM-Stufe werden durch Anlegen eines Magnetfeldes die magnetischen Momente eines paramagnetischen Materials, z.B. eines paramagnetischen Salzes, zumindest teilweise ausgerichtet. Bei dieser Magnetisierung wird Wärme frei, die üblicherweise durch eine Vorkühlstufe abgeführt wird. Wird nun das Magnetfeld abgesenkt, wird die Ausrichtung der magnetischen Momente wieder aufgehoben. Die hierzu notwendige Energie wird dem Material entzogen, das Material kühlt sich ab.

Bei der vorliegenden Erfindung kann nun sowohl die üblicherweise genutzte Kühlwirkung einer EM-Stufe als auch deren "Heizwirkung" beim Hochfahren des Magnetfeldes genutzt werden. Durch Hochfahren des Magnetfeldes wirkt die EM-Stufe als "Heizeinrichtung" und durch Absenken des Magnetfeldes wirkt die EM-Stufe als Kühleinrichtung.

Gemäß der vorteilhaften Ausgestaltung nach Anspruch 2 kann dieses Hochfahren und Absenken des Magnetfeldes im Gegentakt zu den Temperaturschwankungen ±ΔT₁ der mechanischen Kühleinrichtung durchgeführt werden, so dass die Temperaturschwankungen im Gegentakt kompensiert werden. Die Frequenz dieser Temperaturschwankung ±ΔT₁ liegt hier in einem Bereich von 1 bis 100 Hz. Folglich muss auch das Magnetfeld im Gegentakt mit dieser Frequenz hochgefahren und abgesenkt werden. Generell funktioniert das Verfahren jedoch auch für beliebige Störungen der Gleichgewichtstemperatur mit Zeitkonstanten bis hin zu ms.

Gemäß einer weiteren vorteilhaften Ausgestaltung der Erfindung ist die EM-Stufe und/oder die Sensoreinrichtung schwach an die Kühleinrichtung gekoppelt. Durch diese schwache Kopplung werden Temperaturschwankungen gedämpft. Bei Kopplung an die Sensoreinrichtung sind die Leistungsanforderungen an die EM-Stufe reduziert. Damit reduziert sich auch die Baugröße von Magnet, Salzpille etc. Bei Kopplung an die Kühleinrichtung wird eine höhere Leistung benötigt, die Position der Sensoreinrichtung ist jedoch beliebig, da alle Teile im Gleichgewicht gehalten werden.

Durch die weitere vorteilhafte Ausgestaltung nach Anspruch 5 umfasst die Temperaturstabilisierung ein Heizelement, das thermisch mit der Sensoreinrichtung und/oder dem Kaltkopf und/oder der EM-Stufe gekoppelt ist. Durch diese Heizeinrichtung wird der Arbeitspunkt der EM-Stufe festgelegt. Es wird erreicht, dass die EM-Stufe in ihrem dynamischen Bereich gehalten wird, d.h. heißt dass das benötigte Magnetfeld weder zu hoch noch zu niedrig wird.

Durch die schwache thermische Kopplung des Heizelements an die Sensoreinrichtung und/oder die EM-Stufe wird die Temperaturstabilisierung zusätzlich verbessert - Anspruch 6.

Gemäß der vorteilhaften Ausgestaltung nach Anspruch 7 kann auch das Heizelement im Gegentakt zu der Temperaturschwankung gepulst sein.

Die übrigen Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung einer beispielhaften Ausführungsform anhand der Zeichnung.

Es zeigt:
Fig. 1 zeigt eine erste Ausführungsform der Erfindung, bei der eine Sensoreinrichtung thermisch an den Kaltkopf einer mechanischen Kühleinrichtung gekoppelt ist und bei der die Sensoreinrichtung thermisch mit einer Temperaturstabilisierungseinrichtung in Form einer adiabatischen Entmagnetisierungsstufe (EM-Stufe) gekoppelt ist.
Fig. 2 zeigt eine zweite Ausführungsform der Erfindung, die eine Variation der ersten Ausführungsform darstellt und lediglich eine zusätzliche thermische Kopplung aufweist,
Fig. 3 zeigt eine dritte Ausführungsform der Erfindung, bei der die Anordnung von Sensoreinrichtung und EM-Stufe im Vergleich zu der ersten und der zweiten Ausführungsform vertauscht ist,
Fig. 4 zeigt eine vierte Ausführungsform als Variation der dritten Ausführungsform,
Fig. 5 zeigt eine fünfte Ausführungsform der Erfindung, und
Fig. 6 zeigt eine sechste Ausführungsform, bei der zusätzlich ein Heizelement mit der Sensoreinrichtung gekoppelt ist.

In der nachfolgend beschriebenen Ausführungsform der Erfindung werden identische Komponenten bzw. einander entsprechende Komponenten mit identischen Bezugszeichen versehen.

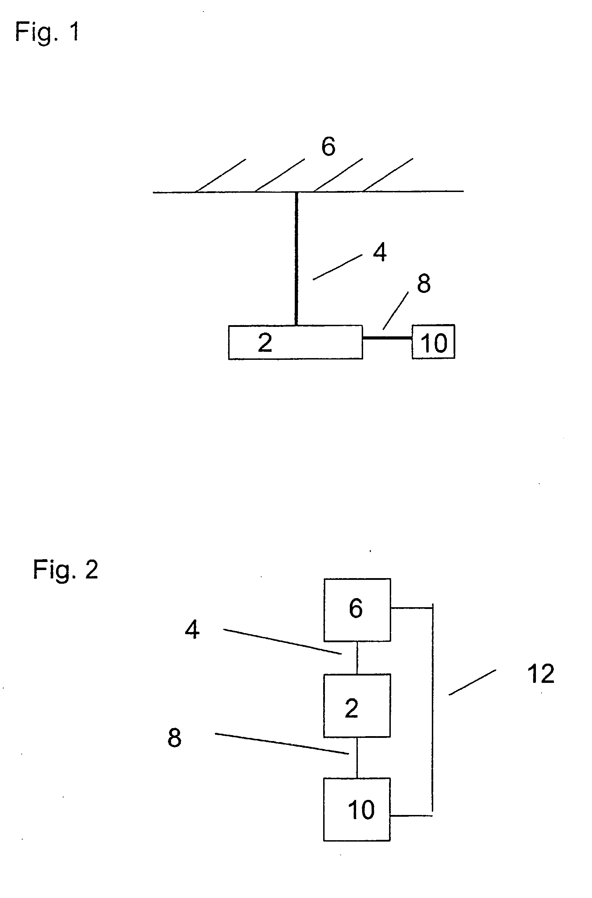

Die erste Ausführungsform nach Fig. 1 weist eine Sensoreinrichtung 2 auf, die über eine erste thermische Kopplungseinrichtung 4 mit einem Kaltkopf 6, einer nicht näher dargestellten mechanischen Kühleinrichtung verbunden ist. Über eine zweite thermische Kopplungseinrichtung 8 ist die Sensoreinrichtung 2 mit einer Entmagnetisierungsstufe bzw. EM-Stufe 10 verbunden.

Durch die nicht näher dargestellte mechanische Kühleinrichtung wird der Kaltkopf 6 auf eine minimale Kühltemperatur T_{minK} abgekühlt. Aufgrund der Eigenheiten der mechanischen Kühleinrichtungen schwankt die minimale Kühltemperatur Tₘᵢₙₖ um eine erste Temperaturdifferenz ±ΔT₁. ΔT₁ ist hierbei in der Größenordnung von 0,1 K. Durch die schwache thermische Kopplung der Sensoreinrichtung 2 an den Kaltkopf 6 wird diese Temperaturschwankung gedämpft auf die Sensoreinrichtung 2 übertragen. Um diese Temperaturschwankung ±ΔT₁ auszugleichen wird eine Temperaturstabilisierungseinrichtung in Form der EM-Stufe 10 bereitgestellt. Hierzu wird die EM-Stufe 10 die über die zweite thermische Kopplungseinrichtung 8 mit der Sensoreinrichtung 2 thermisch verbunden ist im Gegentakt zu der Temperaturschwankung ±ΔT₁ des Kaltkopfes 6 um ±ΔT_{K} gekühlt bzw. "aufgeheizt", d.h. das Magnetfeld der EM-Stufe 10 wird hochgefahren - Kühlung - oder abgesenkt - Heizung . Dieses Hochfahren bzw. Absenken des Magnetfeldes der EM-Stufe 10 erfolgt im Gegentakt mit der gleichen Frequenz mit der die minimale Kühltemperatur T_{minK} schwankt. Vorzugsweise erfolgt die Kühlung bzw. Heizung durch die EM-Stufe 10 so das gilt ΔT₁ = ΔT_{K}, d. h. die Temperaturschwankung ±ΔT₁ der mechanischen Kühleinrichtung bzw. des Kaltkopfes 6 wird durch die EM-Stufe 10 völlig ausgeglichen.

Fig. 2 zeigt eine zweite Ausführungsform der Erfindung, die sich von der ersten Ausführungsform lediglich dadurch unterscheidet, dass die EM-Stufe 10 zusätzlich über eine dritte thermische Kopplungseinrichtung 12 mit dem Kaltkopf 6 verbunden ist. Diese zusätzliche Kopplung 12 zwischen EM-Stufe 10 und Kältekopf 6 hat den Vorteil, dass man den dynamischen Bereich der EM Stufe einstellen kann.

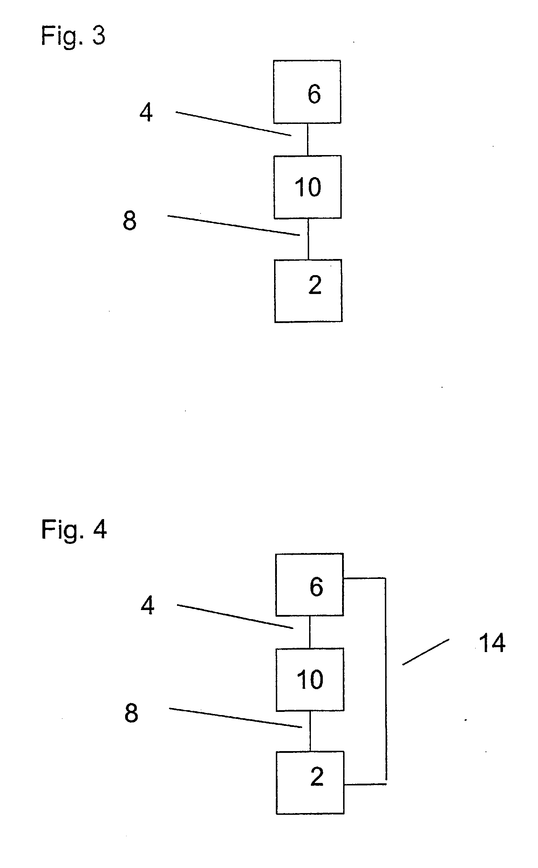

Fig. 3 zeigt eine dritte Ausführungsform der vorliegenden Erfindung, die sich von der ersten Ausführungsform dadurch unterscheidet, dass die Anordnung von EM-Stufe 10 und Sensoreinrichtung 2 in Bezug auf den Kaltkopf 6 ihren Platz getauscht haben. Diese Ausführungsform hat den Vorteil, dass die EM-Stufe baulich klein und kompakt ausgeführt werden kann.

Fig. 4 zeigt eine Variation der dritten Ausführungsform nach Fig. 3. Hierbei ist der Kaltkopf 6 über eine vierte thermische Kopplungseinrichtung 14 mit der Sensoreinrichtung 2 verbunden. Diese Ausgestaltung kann von Vorteil sein, wenn eine EM-Stufe 10 mit hoher Kühlleistung eingesetzt wird.

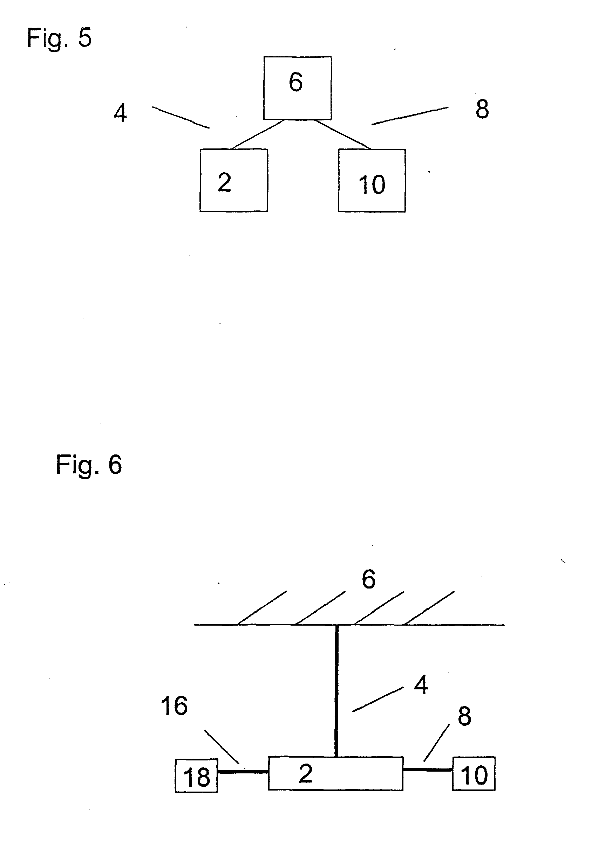

Fig. 5 zeigt eine fünfte Ausführungsform der vorliegenden Erfindung bei der die Sensoreinrichtung 2 und die EM-Stufe 10 unabhängig voneinander thermisch über eine erste und eine zweite thermische Kopplungseinrichtung 4 bzw. 8 mit dem Kaltkopf 6 verbunden sind. Auch diese Ausgestaltung kann von Vorteil sein, wenn eine EM-Stufe 10 mit hoher Kühlleistung eingesetzt wird.

Fig. 6 zeigt eine sechste Ausführungsform der Erfindung, die sich von der ersten Ausführungsform nach Fig. 1 dadurch unterscheidet, dass an die Sensoreinrichtung 2 über eine fünfte thermische Kopplungseinrichtung 16 ein Heizelement 18 mit der Sensoreinrichtung 2 verbunden ist. Durch das Heizelement 18 kann zum einen die gewünschte minimale Kühltemperatur T_{minK} nach oben verschoben werden und zum anderen kann ebenfalls im Gegentakt den Temperaturschwankungen ±ΔT₁ entgegengewirkt werden.

Der Haupteffekt des Heizelements 18 besteht jedoch darin, dass er den Arbeitspunkt der EM-Stufe einstellt. Damit wird erreicht, dass die EM-Stufe nicht ihren dynamischen Bereich verlässt.

### Bezugszeichenliste:

- 2: Sensoreinrichtung
- 4: erste thermische Kopplung
- 6: Kaltkopf
- 8: zweite thermische Kopplung
- 10: EM-Stufe
- 12: dritte thermische Kopplung
- 14: vierte thermische Kopplungseinrichtung
- 16: fünfte thermische Kopplung
- 18: Heizelement

## Patentansprüche

1. Kryo-Detektorvorrichtung mit
einer Sensoreinrichtung (2),
einer Kühleinrichtung mit einem Kaltkopf (6), der thermisch an die Sensoreinrichtung (2) gekoppelt ist, um die Sensoreinrichtung (2) auf eine minimale Kühltemperatur T_{minK} des Kaltkopfes (6) zu kühlen, wobei die minimale Kühltemperatur T_{minK} um eine erste Temperaturdifferenz ±ΔT₁ schwankt, und
einer Temperaturstabilisierungseinrichtung (10, 18), die die Sensoreinrichtung (2) auf eine Betriebstemperatur Tₛ = T_{minK} ± ΔT₂ mit ΔT₂ < ΔT₁ stabilisiert,
**dadurch gekennzeichnet**
**dass** die Temperaturstabilisierungseinrichtung (10, 18) eine Entmagnetisierungsstufe (10) aufweist, die thermisch mit der Sensoreinrichtung (2) und/oder dem Kaltkopf (6) gekoppelt ist und die Sensoreinrichtung (2) und/oder den Kaltkopf (6) um ΔT_{K} kühlt und/oder heizt.

2. Kryo-Detektorvorrichtung nach Anspruch 1, **dadurch gekennzeichnet, dass** die Kühlung/Heizung durch die Entmagnetisierungsstufe (10) im Gegentakt zu den Temperaturschwankungen ±ΔT₁ der Kühleinrichtung erfolgt.

3. Kryo-Detektorvorrichtung nach einem der vorhergehenden Ansprüche, dg, dass die Entmagnetisierungsstufe (10) und/oder die Sensoreinrichtung (2) schwach an den Kaltkopf der Kühleinrichtung gekoppelt ist.

4. Kryo-Detektorvorrichtung nach einem der vorhergehenden Ansprüche, dg, dass ΔT_{K} = ΔT₁ ist.

5. Kryo-Detektorvorrichtung nach einem der vorhergehenden Ansprüche, dg, dass die Temperaturstabilisierungseinrichtung (10, 18) ein Heizelement (18) umfasst, das thermisch mit der Sensoreinrichtung (2) und/oder dem Kaltkopf (6) und/oder der Entmagnetisierungsstufe (10) gekoppelt ist.

6. Kryo-Detektorvorrichtung nach Anspruch 5, **dadurch gekennzeichnet, dass** das Heizelement thermisch schwach an die Sensoreinrichtung (2) und/oder die Entmagnetisierungsstufe (10) und/oder den Kaltkopf (6) gekoppelt ist.

7. Kryo-Detektorvorrichtung nach Anspruch 5 oder 6, **dadurch gekennzeichnet, dass** das Heizelement die Sensoreinrichtung und/oder den Kaltkopf gepulst im Gegentakt zu den Temperaturschwankungen ±ΔT₁ aufheizt.

8. Kryo-Detektorvorrichtung nach einem der vorhergehenden Ansprüche, dg, dass die Entmagnetisierungstufe (10) über eine thermische Kopplungseinrichtung schwach an den Kaltkopf (6) gekoppelt ist.

## Claims

1. Cryodetector device, comprising
a sensor means (2),
a cooling means having a cold head (6) which is thermally coupled to the sensor means (2) so as to cool the sensor means (2) to a minimum cooling temperature T_{minK} of the cold head (6), the minimum cooling temperature Tₘᵢₙₖ fluctuating by a first temperature difference ±ΔT₁, and
a temperature stabilising means (10, 18), which stabilises the sensor means (2) to an operating temperature T_{S} = T_{minK} ± ΔT₂, where ΔT₂ < ΔT₁,
**characterised in that**
the temperature stabilising means (10, 18) comprises a demagnetising stage (10) which is thermally coupled to the sensor means (2) and/or the cold head (6) and cools and/or heats the sensor means (2) and/or the cold head (6) by ΔT_{K}.

2. Cryodetector device according to claim 1, **characterised in that** the cooling/heating by the demagnetising stage (10) is in a push-pull relationship with the temperature fluctuations ±ΔT₁ of the cooling means.

3. Cryodetector device according to any one of the preceding claims, **characterised in that** the demagnetising stage (10) and/or the sensor means (2) are weakly coupled to the cold head of the cooling means.

4. Cryodetector device according to any one of the preceding claims, **characterised in that** ΔT_{K} = ΔT₁.

5. Cryodetector device according to any one of the preceding claims, **characterised in that** the temperature stabilising means (10, 18) comprises a heating element (18) which is thermally coupled to the sensor means (2) and/or the cold head (6) and/or the demagnetising stage (10).

6. Cryodetector device according to claim 5, **characterised in that** the heating element is weakly thermally coupled to the sensor means (2) and/or the demagnetising stage (10) and/or the cold head (6).

7. Cryodetector device according to either claim 5 or claim 6, **characterised in that** the heating element heats the sensor means and/or the cold head in pulses in a push-pull relationship with the temperature fluctuations ± ΔT₁.

8. Cryodetector device according to any one of the preceding claims, **characterised in that** the demagnetising stage (10) is weakly coupled to the cold head (6) via a thermal coupling means.

## Revendications

1. Dispositif de cryodétection, comprenant :
un dispositif capteur (2),
un dispositif de refroidissement muni d'une tête froide (6), couplée thermiquement au dispositif capteur (2), pour refroidir le dispositif capteur (2) à une température de refroidissement minimale T_{minK} de la tête froide (6), la température de refroidissement minimale T_{minK} fluctuant de la valeur d'une première différence de température ±ΔT₁, et
un dispositif de stabilisation de la température (10, 18), stabilisant le dispositif capteur (2) à une température de fonctionnement TS = T_{minK} ±ΔT₂, avec ±ΔT₂ < ±ΔT₁,
**caractérisé en ce que**
le dispositif de stabilisation de la température (10, 18) présente un étage de démagnétisation (10), couplé thermiquement au dispositif capteur (2) et/ou à la tête froide (6) et refroidissant et/ou chauffant le dispositif capteur (2) et/ou la tête froide (6) de ΔT_{K}.

2. Dispositif de cryodétection selon la revendication 1, **caractérisé en ce que** le refroidissement/chauffage au moyen de l'étage de démagnétisation (10) s'effectue en opposition de phase par rapport aux fluctuations de température ±ΔT₁ du dispositif de refroidissement.

3. Dispositif selon l'une des revendications précédentes, **caractérisé en ce que** l'étage de démagnétisation (10) et/ou le dispositif capteur (2) est/sont faiblement couplé(s) à la tête froide du dispositif de refroidissement.

4. Dispositif selon l'une des revendications précédentes, **caractérisé en ce que** ΔT_{K} = ΔT₁.

5. Dispositif selon l'une des revendications précédentes, **caractérisé en ce que** le dispositif de stabilisation de la température (10, 18) comprend un élément chauffant (18), couplé thermiquement au dispositif capteur (2) et/ou à la tête froide (6) et/ou à l'étage de démagnétisation (10).

6. Dispositif de cryodétection selon la revendication 5, **caractérisé en ce que** l'élément chauffant est faiblement couplé au dispositif capteur (2) et/ou à l'étage de démagnétisation (10) et/ou à la tête froide (6).

7. Dispositif de cryodétection selon la revendication 5 ou 6, **caractérisé en ce que** l'élément chauffant chauffe le dispositif capeur et/ou la tête froide de manière pulsée, en opposition de phase par rapport aux fluctuations de température ±ΔT₁.

8. Dispositif selon l'une des revendications précédentes, **caractérisé en ce que** l'étage de démagnétisation (10) est faiblement couplé à la tête froide (6) par l'intermédiaire d'un dispositif de couplage thermique.
